# EUROPEAN PATENT SPECIFICATION

(11) **EP 2 888 934 B1**
(45) Date of publication and mention of the grant of the patent: **16.03.2016**
(21) Application number: 14192765.7
(22) Date of filing: 12.11.2014
(51) Int. Cl.: A01K 47/04, A01K 49/00, A01K 59/00

(54) **Production device for queen bees and royal jelly**
Herstellungsvorrichtung für Königsbienen und Gelée royale
Dispositif de production de gelée royale et de reines d'abeilles

(30) Priority: 30.12.2013 KR 20130167425
(43) Date of publication of application: 01.07.2015
(73) Proprietor: Jang, Bong Hwan, Incheon (KR)
(72) Inventor: Jang, Bong Hwan, Incheon (KR)
(74) Representative: Sloboshanin, Sergej

(56) References cited:
- WO-A1-02/05632
- FR-A1- 2 582 477
- US-A- 4 672 704
- DATABASE WPI Week 201161 Thomson Scientific, London, GB; AN 2011-L13040 XP002738935, & CN 102 144 576 A (SU S) 10 August 2011 (2011-08-10) & CN 102 144 576 A (QI WANG; SONGKUN SU WANG QI; SU SONGKUN) 10 August 2011 (2011-08-10)

## Description

### Technical Field

The invention relates to a production device for queen bees and royal jelly, and more particularly to a production device for queen bees and royal jelly which can achieve an easy work and high productivity with a simple structure. A production device for queen bees is known from document FR-A-258 2 477.

### Background Art

A queen bee is known to have a role of reproduction in the bee society, and a larva spawned by the queen bee eats royal jelly secreted by worker bees to grow an imago. If some larvae eating the royal jelly for 5.5 days grow to new queen bees in the bee group on which an original or mother queen bee reigns over, the new queen bees should take out some worker bees from the original bee group to make a new bee group, which is called as 'hiving off'.

In order to increase the honey production by hiving off, the beekeeper should produce healthy queen bees effectively. Meanwhile, the royal jelly contains much protein, vitamin B, acetylcholine and other nutrients, and it is sold as expensive health food. Therefore, the beekeepers make efforts to increase the production of the royal jelly.

The conventional way to produce queen bees and royal jelly is to transfer the larva into a separate queen house (larva house in the shape of cup or container), and insert the queen house housing the larva into the beehive. Then the worker bees in the beehive supply the larva with royal jelly, and the larva eats the royal jelly to grow into a queen bee. Using this opportunity, the beekeeper can collect the royal jelly secreted by the worker bees.

However, the work of transferring the larva into a queen house is usually done by manual work with a pair of tweezers, which is very cumbersome and it is possible to damage the larva. To cope with this problem, a separate spawn-incubator containing a queen bee is disclosed, the spawn-incubator having a queen house on which the queen bee is spawn. But it is difficult to supply the spawn-incubator with water for proper humidity or nutrients such as sugar solution or proteins timely, so spawning is frequently interrupted or the spawned eggs may not be incubated in that spawn-incubator.

Meanwhile, considering the time and effort required to bring up the queen bee, the beekeeper may bring up a plurality of queen bees in the same beehive, but a grown up queen bee may kill immature queen bees instinctively. But the conventional spawn-incubator does not have a protection device to prevent the grown up queen bee from killing the immature queen bees, so it is not possible to bring up the queen bees effectively.

And, in order to produce the royal jelly, the bee keeper has to attach the queen house containing the larva on the spawn-incubator or the queen house frame individually and detach the queen house from them individually, which may incur inconveniences and low productivity.

### Disclosure

### Technical Problem

The invention suggests to solve the above mentioned problems, and the object of the invention is to provide a production device for queen bees and royal jelly having a simple structure and being capable of bringing up the queen bees in safe condition and producing the royal jelly with easy work to achieve a high productivity of queen bees and royal jelly.

### Technical Solution

According to an aspect of the invention, there is provided a production device for queen bees and royal jelly comprising;
a spawn-incubating unit which is to be inserted in the beehives and includes a first spawn-incubating plate and a second spawn-incubating plate being detachably attachable to each other and forming an inner space, a plurality of worker bee inlets and a queen bee inlet formed on at least one of the first spawn-incubating plate and the second spawn-incubating plate through which the worker bees and the queen bee can respectively pass, a plurality of spawning holes formed on a side of the inlets in which the queen bee can spawn, and feed chambers formed as separate chambers at a side of the inner space and communicating with the inner space or formed on the inner side of the plates as a plurality of recesses, in which feeds such as pollen, water and sugar solution are supplied,
a plurality of larva cell pieces or a larva cell strip on which a plurality of larva cell pieces are aligned, the larva cell pieces or the larva cell strip being separated from the spawn-incubating unit and detachably attachable to the spawning holes and having a larva recess on which the queen bee spawns and the incubated larva is seated, and
a production unit which includes a plurality of queen houses or a queen house strip on which a plurality of queen houses are aligned and a queen house frame on which the queen house or queen house strip are mounted, the queen house having an insert hole corresponding to the larva recess of the larva cell piece, and the larva cell piece or the larva cell strip being detachably attachable to the queen house or the queen house strip so that the royal jelly supplied by the worker bees on the larva recess is collected or the queen bee can be brought up.

According to another aspect of the invention, there is provided a production device for queen bees and royal jelly, wherein the larva cell strip is in the shape of a stick on which the larva cell pieces are aligned, and has a weak line or cut portion between each larva cell piece so that each larva cell piece can be separated individually.

According to another aspect of the invention, there is provided a production device for queen bees and royal jelly, wherein the queen house strip is in the shape of a stick on which the queen houses are aligned, and has a weak line or cut portion between each queen house so that each queen house can be separated individually.

According to another aspect of the invention, there is provided a production device for queen bees and royal jelly, wherein the queen house frame further includes cages which are detachably attachable to the queen house frame, the cages capable of accommodating the queen house as being combined with the larva cell piece, and the cage having worker bee inlets through which the worker bees can pass.

According to the invention as mentioned above, as there is provided a spawn-incubating unit having the spawn-incubating plates being detachably attachable and forming an inner space and including a feed chamber in which feeds such as pollen, water and sugar solution are supplied, sufficient feeds can be supplied to the queen bee accommodated in the spawn-incubating unit so the spawning and incubating activities of the queen bee can be carried out in the safe and feed sufficient environment, and the spawning and incubating activities may be enhanced and increased.

As the larva cell strip is easily detachably engaged on the spawning hole of the spawn-incubating unit, and easily moved from the spawning hole to the queen house strip on the queen house frame or the queen house, the larva can be brought up in the spawn-incubating unit with a safe and feed-sufficient condition, and it can be moved without damage from the spawn-incubating unit to the production unit to achieve an effective and productive beekeeping.

And, as the larva cell strip or the queen house strip are in the shape of a stick and have a weak line or cut portion between each larva cell piece and the queen house, each larva cell piece and each queen house can be separated individually, the individual larva cell piece or the larva cell strip, and the individual queen house or the queen house strip can be selectively used to produce the queen bees and royal jelly to achieve reduction of the time and work required to attach and detach the larva cell piece and the queen house.

And, as the queen house frame includes cages accommodating the queen house as being combined with the larva cell piece, even though a plurality of queen bees are brought up in a space, the cages can protect the immature queen bees from the mature queen bee which would kill the immature queen bees instinctively.

### Description of the Drawings

FIG. 1 is a perspective view of one embodiment according to the invention
FIG. 2 is an exploded view showing a part of the above embodiment
FIG. 3 is an exploded view showing another part of the above embodiment
FIG. 4 is an exploded view showing another part of the above embodiment
FIG. 5 is an perspective showing the installing of a part of the above embodiment
FIG. 6 is a sectional view of the installing state of FIG. 5
FIG. 7 is a perspective view showing the installing of a part of the above embodiment
FIG. 8 is a sectional view of the installing state of FIG. 7

### Detailed Description of the Invention

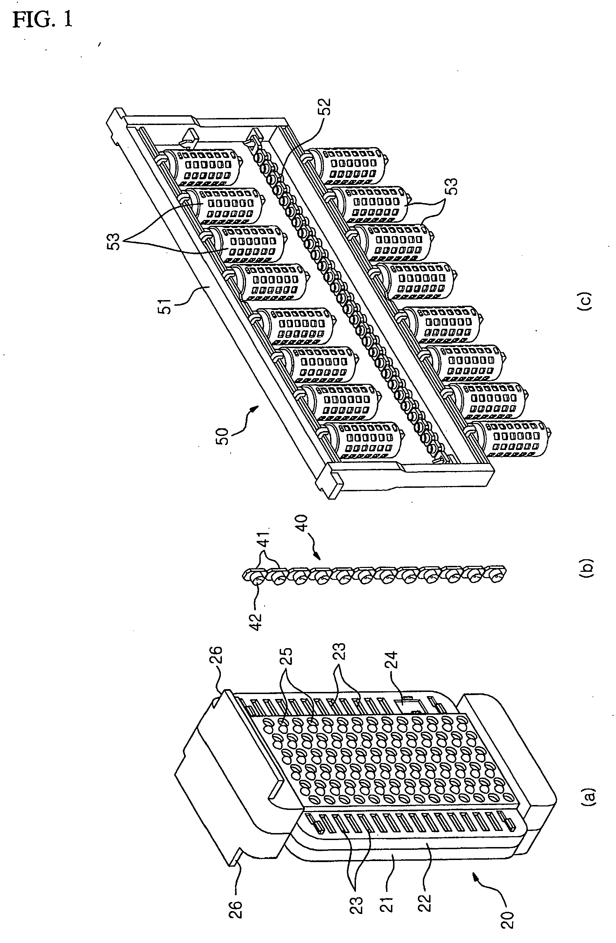

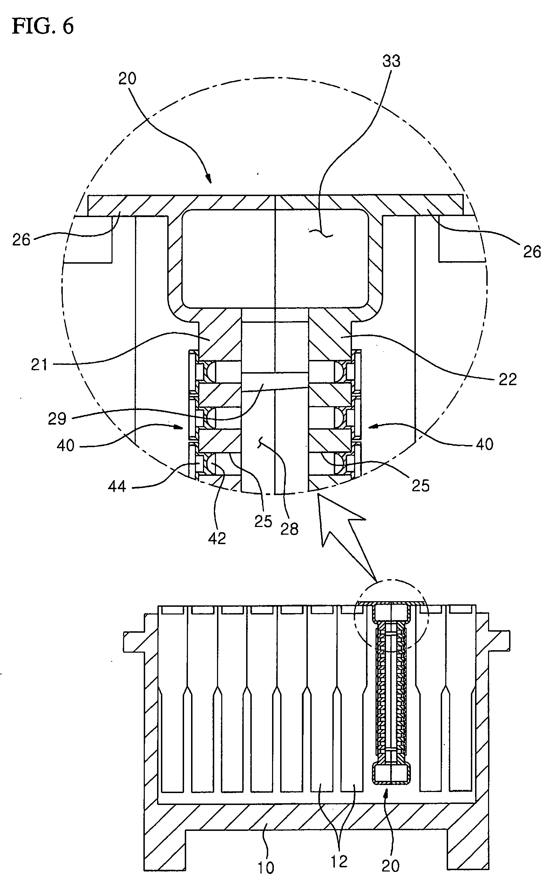

Hereinafter, the preferred embodiments of the invention will be described with reference to the drawings. FIG. 1 to FIG. 8 show the embodiment of the invention. FIG 1a to FIG.1c show the spawn-incubating unit 20, larva cell strip 40 and production unit 50 respectively. The spawn-incubating unit 20 is in the shape of a rectangular box in which the first spawn-incubating plate 21 and the second spawn-incubating plate 22 are detachably attached to each other.

A plurality of inlets 23, 24 and a plurality of spawning holes 25 are formed on the spawn-incubating plates 21, 22. The inlets 23, 24 include worker bee inlets 23 distributed in a vertical direction on both sides of each plate 21, 22, and a queen bee inlet 24 which is larger than the worker bee inlets 23. The queen bee cannot pass through the worker bee inlet 23, and the queen bee inlet 24 has a door to prevent the queen bee from passing through after it is entrapped in the spawn-incubating unit 20. The spawning holes 25 are distributed in the vertical and horizontal directions between the worker bee inlets 23.

The larva cell strip 40 is formed in the shape of a stick, on which larva cell pieces 41 having a larva recess 42 are aligned. If the larva cell strip 40 is engaged with the spawning holes 25 of the spawn-incubating unit 20, the queen bee can spawn in the larva recesses 42 of the larva cell pieces 41.

The production unit 50 is provided with a queen house frame 51 in rectangular shape, and a queen house strip 52 in the shape of a stick corresponding to the larva cell strip 40 is attached on the queen house frame 51. A plurality of cylindrical cages 53 are attached on the upper and lower part of the queen house frame 51. If the larva cell strip 40 is engaged with the queen house strip 52, then the worker bee will supply the larva in the queen house strip 52 with the royal jelly as a larva feed, and the loyal jelly is accumulated in the insert hole 61, and the beekeeper can collect the royal jelly from it. A larva can be brought up into a queen bee in the cage 53.

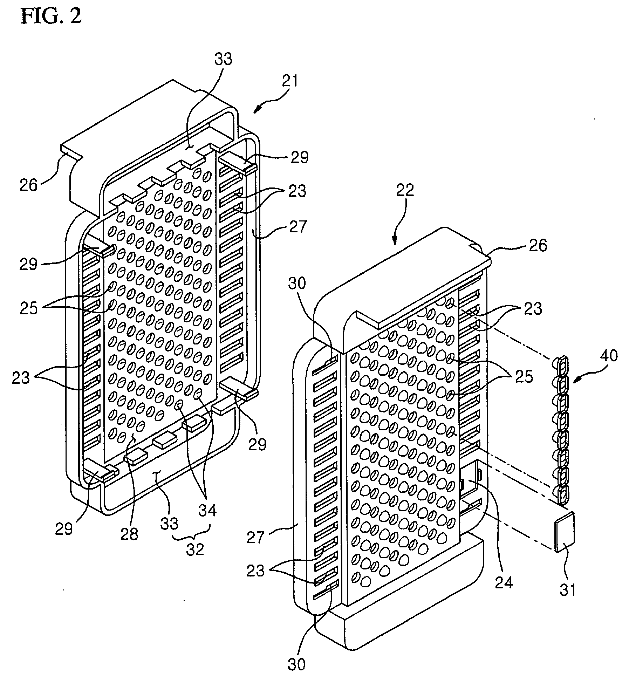

As shown in FIG. 2, the spawn-incubating unit 20 comprises a first spawn-incubating plate 21 and a second spawn-incubating plate 22 formed as a plastic material and being detachably attachable to each other. The plates 21, 22 have handles 26 on the upper part of it, and a surrounding wall 27 with a certain height is formed on the periphery of the first and the second spawn-incubating plates 21, 22. If the first spawn-incubating plate 21 and the second spawn-incubating plate 22 are engaged to each other, an inner space 28 is formed by the surrounding wall 27. Clamping projections 29 and the corresponding clamping holes 30 are formed on the upper and the lower part of the plates 21, 22. As mentioned above, each plate 21, 22 is provided with a plurality of worker bee inlets 23, a queen bee inlet 24 with a door, and spawning holes 25 in which the queen bee spawns.

A feed chamber 32 is formed in the spawn-incubating unit 20, in which feeds such as pollen, water or sugar solution are filled so that the queen bee entrapped in the spawn-incubating unit 20 can eat those feeds. Specifically, pollen chambers 33 are formed as separate spaces on the upper and lower part of the plates 21, 22 which communicate with the inner space 28 of the spawn-incubating unit 20, and into which the pollen paste mixed with pollen, water, and sugar solution is supplied. A plurality of liquid supply chambers 34 in the shape of a recess are formed on the inner surface of the plates 21, 22 parallel to the spawning holes 25, in which water or sugar solution are sprayed.

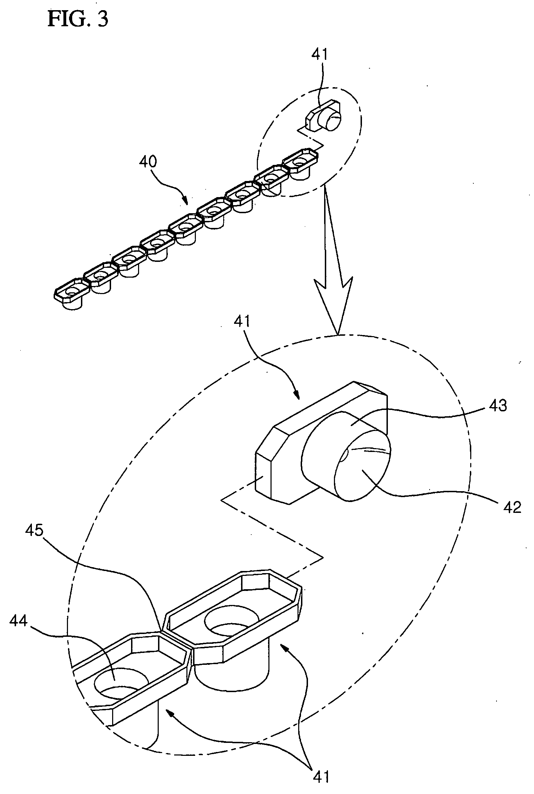

As shown in FIG. 3, the larva cell strip 40 is a stick member on which a plurality of larva cell pieces 41 are aligned in a line. Each larva cell piece 41 includes a larva recess 42 at the end of the projection 43 on which the spawning hole 25 of the spawn-incubating unit 20 is inserted. On the opposite side of the larva recess 42 a flesh-removing recess 44 is formed. The fresh-removing recess 44 is to reduce the material when it is formed as a plastic formation and to make the bottom of the larva recess 42 thin so that the larva in the larva recess 42 can be seen by human eye.

A weak line or cut portion 45 is formed between each larva cell piece 41 of the larva cell strip 40 so that the beekeeper can divide or separate each larva cell piece 41 from the larva cell strip 40 easily.

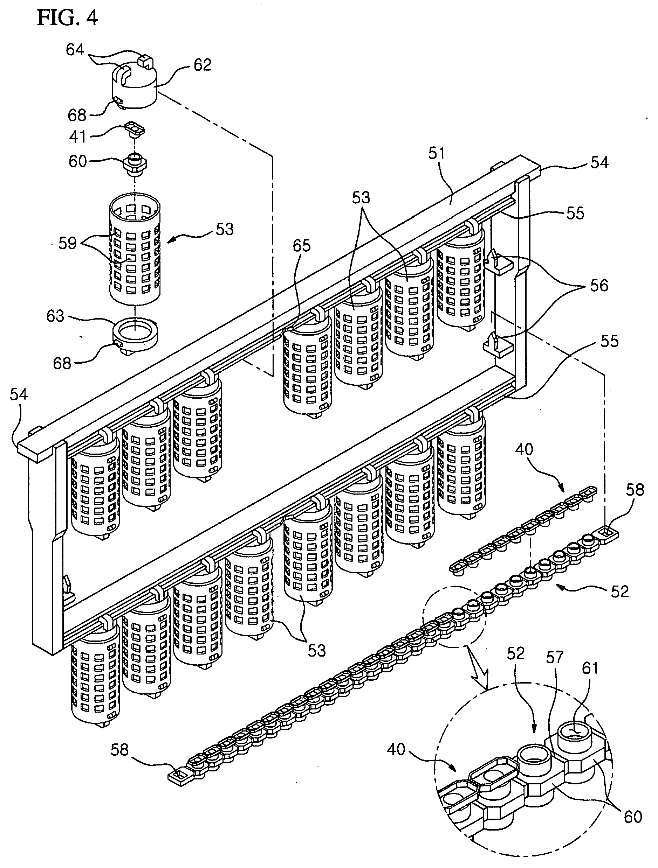

As shown in FIG. 4, the production unit 50 includes a rectangular queen house frame 51, on which a queen house 52 and a plurality of cages 53 are engaged. The queen house frame 51 has handles 54 projected from both sides of the upper part of it, and guide rails 55 extend along the horizontal and longitudinal bar of the frame 51 on the upper and lower part of it. Clamping projections 56 to clamp the queen house strip 52 are formed on the vertical bar of the frame 51.

The queen house strip 52 is a stick member on which a plurality of queen houses 60 are aligned in a line. The queen house 60 includes an insert hole 61 corresponding to the larva recess 42 of the larva cell piece 41 so that the larva cell strip 40 can be engaged into the insert hole 61. Similarly to the larva cell strip 40, the queen house strip 52 includes weak line or cut portions 57 between each queen house 60 so that the queen house 60 can be easily divided or separated individually. Clamping holes 58 are formed on both ends of the queen house strip 51 to be engaged with the clamping projections 56 of the queen house frame 51.

The cage 53 is shaped in cylindrical form, and a plurality of inlets 59 are formed on the side surface, and an upper cover 62 and a lower cover 63 are provided on the upper and lower ends of the cage 53. The upper cover 62 has a projecting hook 64 to be engaged with the guide rail 55 of the queen house frame 51. Notches 65 are formed along the longitudinal direction of the guide rail 65 so that the projecting hook 64 of the upper cover 62 can be easily engaged.

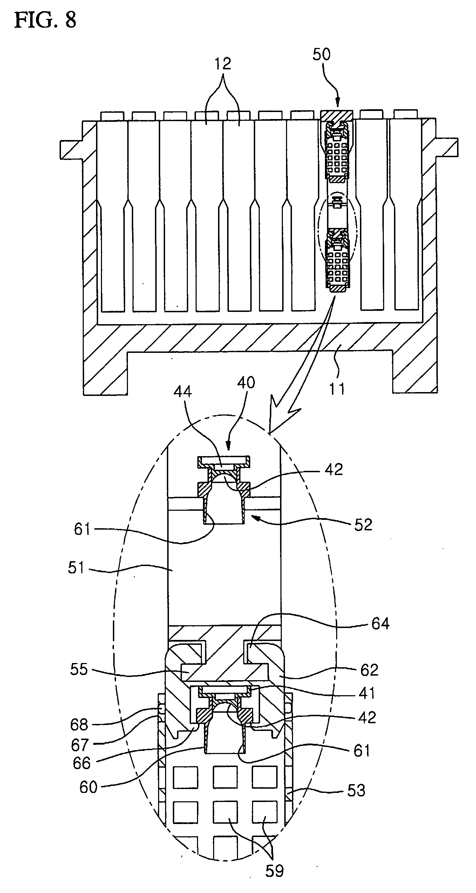

The cage 53 may house a larva cell piece 41 as being seated on the queen house 60. A clamping piece 66 (refer to FIG. 8) is formed on the upper cover 62 to hang the larva cell piece 41 and the queen house 60. A clamping recess 67 and the corresponding projection 68 are formed on the cage 53 and the upper and lower cover 62, 63 (refer to FIG. 8).

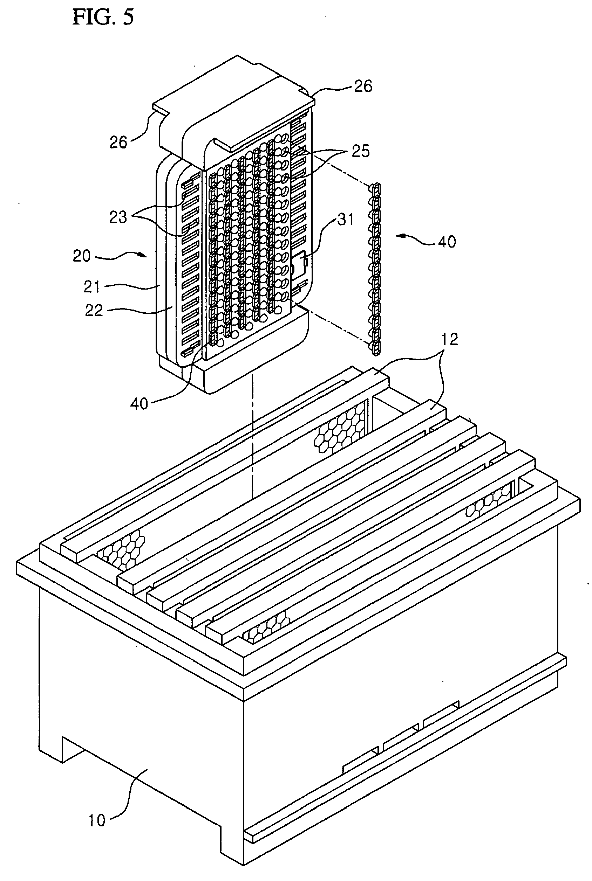

According to the invention as described above, the queen bee is effectively induced to spawn and new queen bees and royal jelly can be produced, which will be described with reference to FIG. 5 to FIG. 8.

As shown in FIG. 5 to FIG. 6, the spawn-incubating unit 20 is inserted between the honeycomb boards 20 in the beehive 10. At this time, the spawn-incubating unit 20 is in the state that a plurality of larva cell strips 40 are engaged on the outer surface of the spawn-incubating plates 21, 22, and the queen bee is induced into and entrapped inside the inner space 28 of the spawn-incubating pates 21, 22, and the queen bee inlet 34 is closed by the door 31. It is known that, after ten days from the birth, the queen bee is in mating season, then the queen bee flies out of the beehive 10 and mates with the male bee and returns to bee hive 10. Then the queen be is induced into and entrapped inside the inner space 28 of the spawn-incubating unit 20.

The queen bee entrapped in the spawn-incubating unit 20 can sufficiently eat the feeds in the feed chamber 32 inside the unit 20 filled by the beekeeper even though the worker bees do not achieve sufficient feed supply activity, and the queen bee spawns on the spawn holes 25, and the incubated larva is seated on the larva recess 42 of the larva cell strip 40 inserted on the spawn holes 25. This requires three to four days after spawn, so the beekeeper should change the larva cell strip 40 on the spawn holes 25 with an interval of three to four days.

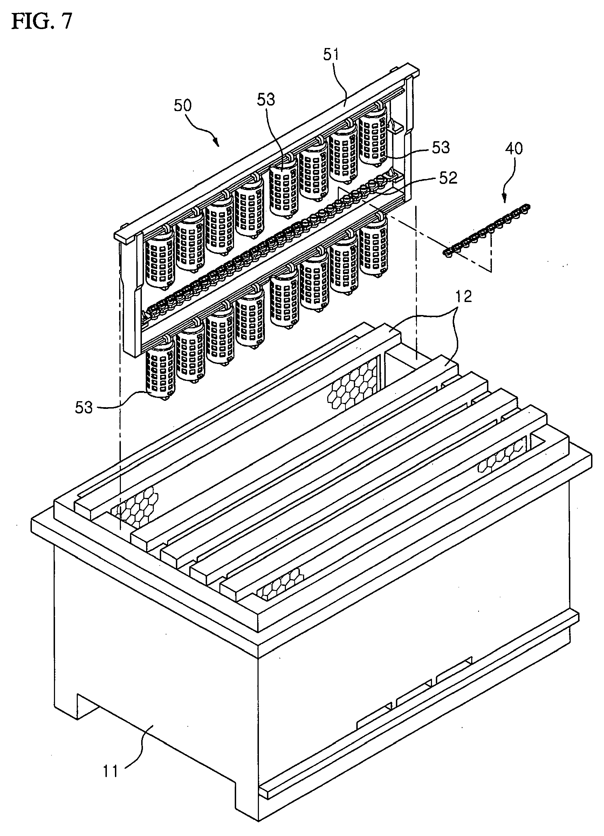

As shown in FIG. 7 and FIG. 8, if the larva is seated on the larva recess 42, then the beekeeper removes the larva cell strip 40 from the spawn-incubating unit 20 and attaches it to the production unit 50. At this time, some larva cell strip 40 is cut along the weak lines or cut portion 45, and the separated larva cell pieces 41 as being seated on the queen house 60 is put in the cage 53 and suspended on the queen house frame 51. Other larva cell strips 40 are seated on the queen house strip 52 and inserted on the beehive 10 other than that in which the spawn-incubating unit 20 is inserted.

If this production unit 50 is inserted in the beehive 11, the worker bee in the beehive 11 will supply the larva with the royal jelly through the inlet 59 of the cage 53, and the larva eat the royal jelly, and after ten days from spawn, the larva in the cage 53 grows up into a queen bee.

As for the queen house strip 52, the royal jelly supplied by the worker bee on the larva recess 42 of the larva cell strip 40 engaged on the queen house strip 52 will be accumulated on the insert hole 61 of the queen house 60. Then the beekeeper can collect the royal jelly with an interval of two to four days, and at the same time, a new larva cell strip 40 is changed and attached.

## Claims

1. A production device for queen bees and royal jelly comprising;
a spawn-incubating unit (20) which is to be inserted in the beehives and includes a first spawn-incubating plate (21) and a second spawn-incubating plate (22) being detachably attachable to each other and forming an inner space (28), a plurality of worker bee inlets (23) and a queen bee inlet (24) formed on at least one of the first spawn-incubating plate (21) and the second spawn-incubating plate (22) through which the worker bees and the queen bee can respectively pass, a plurality of spawning holes (25) formed on a side of the inlets (23, 24) in which the queen bee can spawn, and feed chambers (32) formed as separate chambers at a side of the inner space (28) and communicating with the inner space (28) or formed on-the inner side of the plates (21, 22) as a plurality of recesses, in which feeds such as pollen, water and sugar solution are supplied,
a plurality of larva cell pieces (41) or a larva cell strip (40) on which a plurality of larva cell pieces (41) are aligned, the larva cell pieces (41) or the larva cell strip (40) being separated from the spawn-incubating unit (20) and detachably attachable to the spawning holes (25) and having larva recess (42) on which the queen bee spawns and the incubated larva is seated, **characterised in that**, the device further comprises
a production unit (50) which includes a plurality of queen houses (60) or a queen house strip (52) on which a plurality of queen houses (60) are aligned, and a queen house frame (51) on which the queen houses (60) or queen house strip (52) are mounted, the queen house (60) having an insert hole (61) corresponding to the larva recess (42) of the larva cell piece (41), and the larva cell piece (41) or the larva cell strip (40) being detachably attachable to the queen house (60) or the queen house strip (52) so that the royal jelly supplied by the worker bees on the larva recess (42) is collected or the queen bee can be brought up.

2. The production device for queen bees and royal jelly of claim 1, wherein the larva cell strip (40) is in the shape of a stick on which the larva cell pieces (41) are aligned, and has a weak line or cut portion (45) between each larva cell piece (41) so that each larva cell piece (41) can be separated individually.

3. The production device for queen bees and royal jelly of claim 1 or 2, wherein the queen house strip (52) is in the shape of a stick on which the queen houses (60) are aligned, and has a weak line or cut portion (57) between each queen house (60) so that each queen house (60) can be separated individually.

4. The production device for queen bees and royal jelly of claim 1 or 2, wherein the queen house frame (51) further includes cages (53) which are detachably attachable to the queen house frame (51), the cages (53) capable of accommodating the queen house (60) as being combined with the larva cell piece (41), and the cage (53) having worker bee inlets (59) through which the worker bees can pass.

## Patentansprüche

1. Produktionsvorrichtung für Bienenköniginnen und Gelée royale umfassend:
eine Brut inkubierende Einheit (20), die in die Bienenstöcke einzuführen ist und eine erste Brut inkubierende Platte (21) und eine zweite Brut inkubierende Platte (22), die lösbar aneinander befestigbar sind und einen Innenraum (28) bilden, eine Vielzahl von Arbeitsbieneneinlässen (23) und einen Bienenköniginneneinlass (24), die auf wenigstens einer der ersten Brut inkubierenden Platte (21) und der zweiten Brut inkubierenden Platte (22) ausgebildet sind, durch die die Arbeitsbienen und die Bienenkönigin jeweils passieren können, eine Vielzahl von Eiablagelöchern (25), die auf einer Seite der Einlässe (23, 24) ausgebildet sind, in die die Bienenkönigin Eier ablegen kann, und Futterzellen (32) aufweist, die als separate Kammern auf einer Seite des Innenraums (28) ausgebildet sind und mit dem Innenraum (28) in Verbindung stehen oder auf der Innenseite der Platten (21, 22) als eine Vielzahl von Aussparungen ausgebildet sind, in denen Futter wie Pollen, Wasser und Zuckerlösung zugeführt wird,
eine Vielzahl von Larvenzellenstücken (41) oder einen Larvenzellenstreifen (40), auf dem eine Vielzahl von Larvenzellenstücken (41) fluchtend ausgerichtet sind, wobei die Larvenzellenstücke (41) oder der Larvenzellenstreifen (40) von der Brut inkubierenden Einheit (20) getrennt und mit den Eiablagelöchern (25) lösbar verbindbar sind und eine Larvenaussparung (42) haben, auf die die Bienenkönigin Eier ablegt und auf der die inkubierte Larve platziert wird,
**dadurch gekennzeichnet, dass** die Vorrichtung weiterhin umfasst:
eine Produktionseinheit (50), die eine Vielzahl von Königinnenhäusern (60) oder einen Königinnenhausstreifen (52), auf dem eine Vielzahl von Königinnenhäusern (60) fluchtend ausgerichtet sind, und einen Königinnenhausrahmen (51) aufweist, an dem die Königinnenhäuser (60) oder der Königinnenhausstreifen (52) angebracht sind, wobei das Königinnenhaus (60) ein Einsatzloch (61) hat, das der Larvenaussparung (42) des Larvenzellenstücks (41) entspricht, und das Larvenzellenstück (41) oder der Larvenzellenstreifen (40) an dem Königinnenhaus (60) oder dem Königinnenhausstreifen (52) lösbar befestigbar sind, so dass das von den Arbeitsbienen auf der Larvenaussparung (42) bereitgestellte Gelée royale gesammelt wird oder die Bienenkönigin aufgezogen werden kann.

2. Produktionsvorrichtung für Bienenköniginnen und Gelée royale nach Anspruch 1, bei der der Larvenzellenstreifen (40) die Form eines Stabes hat, auf dem die Larvenzellenstücke (41) fluchtend ausgerichtet sind, und eine geschwächte Linie oder einen eingeschnittenen Abschnitt (45) zwischen jedem Larvenzellenstück (41) hat, so dass jedes Larvenzellenstück (41) individuell getrennt werden kann.

3. Produktionsvorrichtung für Bienenköniginnen und Gelée royale nach Anspruch 1 oder 2, bei der der Königinnenhausstreifen (52) die Form eines Stabes hat, auf dem die Königinnenhäuser (60) fluchtend ausgerichtet sind, und eine geschwächte Linie oder einen eingeschnittenen Abschnitt (57) zwischen jedem Königinnenhaus (60) hat, so dass jedes Königinnenhaus (60) individuell getrennt werden kann.

4. Produktionsvorrichtung für Bienenköniginnen und Gelée royale nach Anspruch 1 oder 2, bei der der Königinnenhausrahmen (51) weiterhin Käfige (53) umfasst, die mit dem Königinnenhausrahmen (51) lösbar verbindbar sind, wobei die Käfige (53) in der Lage sind, das Königinnenhaus (60) aufzunehmen, wenn es mit dem Larvenzellstück (41) kombiniert ist, und der Käfig (53) Arbeitsbieneneinlässe (59) hat, durch die die Arbeitsbienen passieren können.

## Revendications

1. Dispositif de production de reines d'abeilles et de gelée royale comprenant :
une unité (20) d'incubation de ponte qui est destinée à être insérée dans les ruches et inclut une première plaque (21) d'incubation de ponte et une deuxième plaque (22) d'incubation de ponte pouvant être attachées de façon détachable l'une à l'autre et formant un espace intérieur (28), une pluralité d'entrées (23) d'abeilles ouvrières et une entrée (24) de reine d'abeilles formées sur au moins une de la première plaque (21) d'incubation de ponte et de la deuxième plaque (22) d'incubation de ponte à travers lesquelles les abeilles ouvrières et la reine des abeilles peuvent respectivement passer, une pluralité de trous (25) de ponte formés sur un côté des entrées (23, 24) dans lesquels la reine d'abeilles peut pondre, et des chambres (32) d'alimentation formées comme des chambres séparées au niveau d'un côté de l'espace intérieur (28) et communiquant avec l'espace intérieur (28) ou formées sur le côté intérieur des plaques (21, 22) comme une pluralité d'évidements, dans lesquelles des aliments tels qu'une solution de pollen, d'eau et de sucre sont amenés,
une pluralité d'alvéoles (41) pour larve ou une bande (40) d'alvéoles pour larve sur laquelle une pluralité d'alvéoles (41) pour larve sont alignées, les alvéoles (41) pour larve ou la bande (40) d'alvéoles pour larve étant séparées de l'unité (20) d'incubation de ponte et pouvant être attachées de façon détachable aux trous (25) de ponte et ayant un évidement (42) pour larve sur lequel la reine des abeilles pond et la larve incubée est logée, **caractérisé en ce que** le dispositif comprend en outre
une unité (50) de production qui inclut une pluralité d'alvéoles royales (60) ou une bande (52) d'alvéoles royales sur laquelle une pluralité d'alvéoles royales (60) sont alignées, et un cadre (51) d'alvéoles royales sur lequel les alvéoles royales (60) ou la bande (52) d'alvéoles royales sont montées, l'alvéole royale (60) ayant un trou (61) d'insertion correspondant à l'évidement (42) pour larve de l'alvéole (41) pour larve, et l'alvéole (41) pour larve ou la bande (40) d'alvéoles pour larve pouvant être attachée de façon détachable à l'alvéole royale (60) ou la bande (52) d'alvéoles royales de telle sorte que la gelée royale fournie par les abeilles ouvrières sur l'évidement (42) pour larve est collectée ou la reine d'abeilles peut être élevée.

2. Dispositif de production de reines d'abeilles et de gelée royale selon la revendication 1, dans lequel la bande (40) d'alvéoles pour larve est sous la forme d'un bâton sur lequel les alvéoles (41) pour larve sont alignées, et a une ligne de faiblesse ou une partie découpée (45) entre chaque alvéole (41) pour larve de telle sorte que chaque alvéole (41) pour larve peut être séparée individuellement.

3. Dispositif de production de reines d'abeilles et de gelée royale selon la revendication 1 ou 2, dans lequel la bande (52) d'alvéoles royales est sous la forme d'un bâton sur lequel les alvéoles royales (60) sont alignées, et a une ligne de faiblesse ou une partie découpée (57) entre chaque alvéole royale (60) de telle sorte que chaque alvéole royale (60) peut être séparée individuellement.

4. Dispositif de production de reines d'abeilles et de gelée royale selon la revendication 1 ou 2, dans lequel le cadre (51) d'alvéoles royales inclut en outre des cages (53) qui peuvent être attachées de façon détachable au cadre (51) d'alvéoles royales, les cages (53) aptes à recevoir l'alvéole royale (60) comme étant combinée avec l'alvéole (41) pour larve, et la cage (53) ayant des entrées (59) d'abeilles ouvrières à travers lesquelles les abeilles ouvrières peuvent passer.
